# EUROPEAN PATENT APPLICATION

(11) **EP 1 262 846 A1**
(43) Date of publication of application: **04.12.2002**
(21) Application number: 02011380.9
(22) Date of filing: 23.05.2002
(51) Int. Cl.: G05B 19/418

(54) **Use of structured status images in a control system for an industrial automation process**

(30) Priority: 25.05.2001 FI 20011097
(71) Applicant: Metso Automation Networks Oy, 33900 Tampere (FI)
(72) Inventor: Karaila, Mika, 33730 Tampere (FI)
(74) Representative: Leson, Thomas Johannes Alois, Dipl.-Ing.

(57) **Abstract**

A method of using status images describing a process in a control system for an industrial automation process. In the method, process values are collected from the process describing the status thereof. Structured status documents are generated from the process values collected from the process. The process values comprised by at least two status documents are compared when there is need to find the differences in the operation of the process at different points in time. The differences in the status documents are displayed to a user.

## Description

### BACKGROUND OF THE INVENTION

The invention relates to monitoring an industrial automation process and particularly to the use of status images in a process control system.

In an industrial process, a highly automated process control system sees to the proper operation of the process. An industrial process, such as a papermaking process or a power plant process, is very extensive and complex and involves a plurality of variables. Process control systems comprise several computer terminals whose user interfaces allow process controllers, or operators, to monitor and adjust the operation of the process. The state of a process is characterized by different measurement values and set values. In the process, variable measurement values are monitored and, when a value controlled exceeds its limit value, an alarm may be given. The status of a process is typically described by giving status information, not only as numbers, but also only in graphic form. If required, so-called status images can be stored from a display, which are typically image copies in Bitmap or gif format of the current status of the process as shown on the display. Status images are stored at least when the process is in a normal state when no alarms exist or nothing else deviating from what is desired is occurring in the process.

Any disturbance in the process or any other reason why the status of the process should be compared with a previous status results in that the operator retrieves a stored status image and prints a hard copy thereof or looks for a printed status image. The operator then compares the printed status image with the process status on the display and estimates the magnitude of any differences on basis of what he sees. The problem in the prior art arrangement is that printing and comparing are slow and the accuracy of the estimate may vary greatly. The process may operate incorrectly the entire time employed for the printing and comparing, which may aggravate the problem and cause extra costs.

### BRIEF DESCRIPTION OF THE INVENTION

The object of the invention is thus to provide a method and an apparatus implementing the method so as to alleviate the above problems. The objects of the invention are achieved by a method, system and workstation, which are characterized in what is disclosed in the independent claims. The preferred embodiments of the invention are disclosed in the dependent claims.

The invention is based on generating structured status documents for status images from process values collected from the process. The process values comprised by at least two status documents are compared when there is need to find differences in process operation at different points in time. The differences are presented to a user, typically a process operator. The process values are any values relating to the process, typically measurement values and set values.

The advantage of the method and system of the invention is that the operator no longer needs to perform the comparison, making the comparison more accurate and faster. In a structured document, process values are outlined, which enables automatic comparison and further processing of the process values. This significantly intensifies process supervision and control. When the operation of the process is changed, i.e. one of the hundreds of set values is changed, for example, the operator finds this out quickly.

In accordance with a preferred embodiment of the invention, the operation of a process is controlled based on differences. The system may automatically change the set values of measurement objects comprising deviating measurement values, for example. This provides the advantage that the necessary changes to the process can be made faster than an operator can make manually. The invention is also usable in changing the run situation, allowing an automatic check to be made to see which process parts differ from a previous situation on which a status document was previously stored.

### BRIEF DESCRIPTION OF THE FIGURES

In the following, the invention will be described in detail in connection with preferred embodiments with reference to the accompanying drawings, in which
Figure 1 is a block diagram of a process control system;
Figure 2 is a block diagram illustrating the structure of a server and a workstation; and
Figure 3 is a flow diagram illustrating the method of a preferred embodiment of the invention.

### DETAILED DESCRIPTION OF THE INVENTION

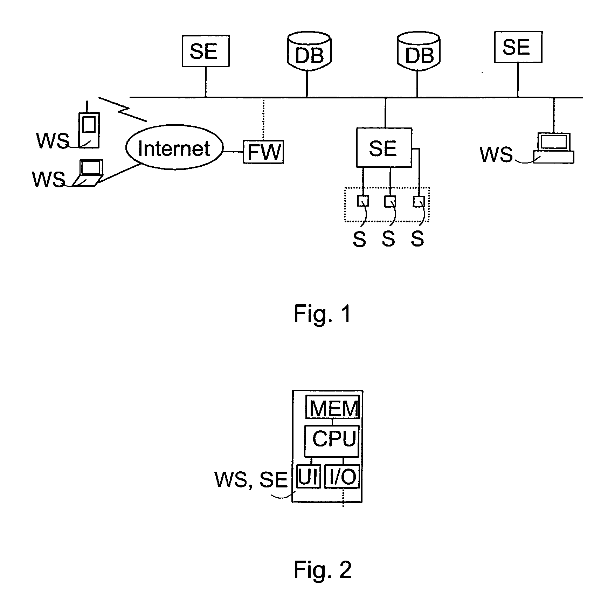

Figure 1 shows a process control system. The system comprises a plurality of workstations WS, servers SE and databases DB, typically networked via a local area network. Sensors S are connected to the servers (or process workstations WS) and they collect real-time measurement values describing the status of the process. The measurement values are relayed to a server and possibly further to the databases DB and/or the workstations WS. The servers SE are typically associated with a certain functionality of the process, and data related thereto are stored in one or more databases DB connected to a server SE. Data transfer can be arranged based on the IP protocol, for example. The workstations WS may be given access to the system also from external networks via the Internet, in which case a firewall FW can be used to control the connections to the data system.

The workstation WS may be e.g. a desk computer, a portable computer or a wireless mobile station. The workstation WS maybe wireless, an access point offering a wireless connection to the network. The wireless connection may be arranged by means of cellular systems known *per se,* such as based on the GSM or UMTS (Universal Mobile Telecommunications System) standards, or by means of different wireless local area networks, e.g. networks based on the IEEE802.11 or BRAN standards (Broadband Radio Access Network). The workstations WS may be of different types: engineering workstations, process workstations, diagnostics workstations, operator workstations and alarm workstations.

As Figure 2 illustrates, the workstations WS and servers SE comprise memory MEM, a user interface UI, I/O means I/O and at least one processor CPU. The memory MEM comprises a non-volatile part for storing the program code portions controlling the CPU and a read/write memory part for use in data processing.

Each object to be measured, such as a device in the system or a device entity formed by given devices, has a special tag for identifying it in the system. Several process values, which may be set values and/or measurement values, are typically associated with the tag. The set values specify the operation of the device and may include switch positions and confirmation values, for example. There may be a plurality of tags and set and measurement values associated therewith, whereby the advantages of the invention are emphasized. There may be tags on several levels; e.g. tag P1 for identifying a given process and tag P1ID1 associated with tag P1 and identifying a given controller in the process. Controller P1ID1 has special set and measurement values; the upper-level process P1 may also have special set and measurement values. Measurement values may include the amount, temperature, flow, and pressure of the material, for example. Set values may include different switch positions, timing, counter settings etc. Set and measurement values preferably also have special tags.

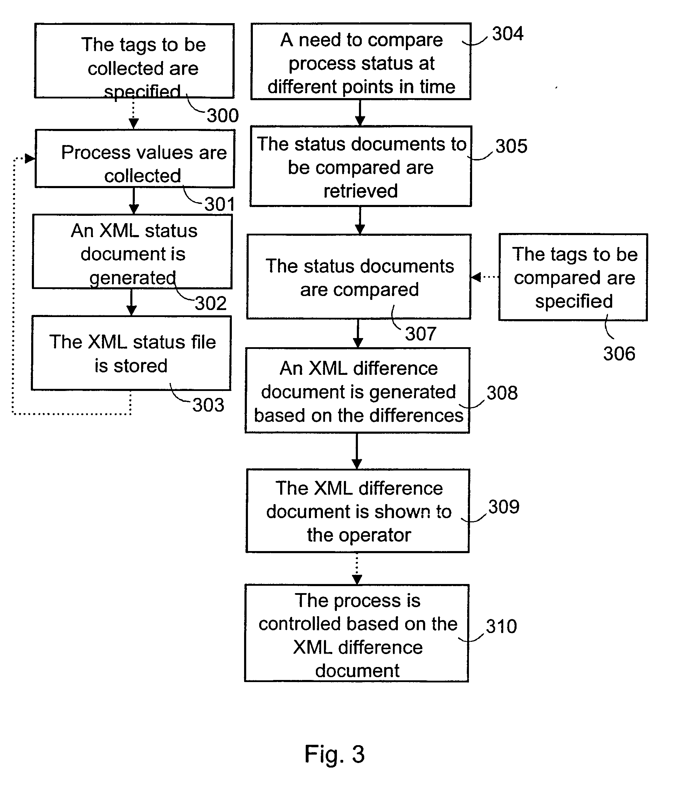

Figure 3 illustrates a method according to a preferred embodiment of the invention, wherein status documents according to the XML language are created from process values. The system comprises an application wherein process values to be monitored are specified 300 based on tags. Tags, whose process values are retrieved and constitute inputs to the application, are stored in a device collecting process values, such as in the memory MEM of a workstation WS or a server SE. Typically, a resource locator, such as a URL (Uniform Resource Locator), is associated with a tag and the application is arranged to retrieve the process values using the locator. The tags can be specified in detail for different devices and values as a set file executed by the application, for example. The application collects 301 process values from the process indicating its status. Process values can be retrieved from process sensors S and devices controlling them, server memories or databases. In the system, in addition to process values (set values, measurement values), additional information may also be retrieved, such as general information or instructions describing the device. The specifications (e.g. font or colour), required for generating a status image, but not process values *per se*, are additional information to be added to the status documents. Different process-specific tags or internal, for example image-specific tags may be used to associate different set values and additional information with the images.

Of the process values, structured XML status documents are generated 302. All values of the tags used in generating the status image describing the process are typically used. When structured status documents are generated, information to be collected in the status document can be arranged in accordance with a pre-specified document type description DTD. The DTD specifies the tags used in the XML language, the structural relations between the elements (!ELEMENT) between the tags and other definitions of the XML documents to be used. As is well known from the XML language, an element starts with an initial tag (e.g. <section>), ends with an end tag (</section>) and may comprise text or other elements. However, in valid status documents the DTD is not necessary, provided the elements to be processed are specified in the application processing the status document. To enable further processing, the process values are grouped in the status document based on tags, e.g. a special element can be specified in the DTD for each tag, the element typically defining several process values. In a system, the number of process values to be monitored is usually very high, i.e. several status documents are generated in the system for the different entities to be monitored.

The system may comprise for instance a controller whose tag is FIC-100. In an XML-form status document, the process values of the controller (SetValue stands for the set value and MeasValue for the measurement value) may be presented for example as follows:

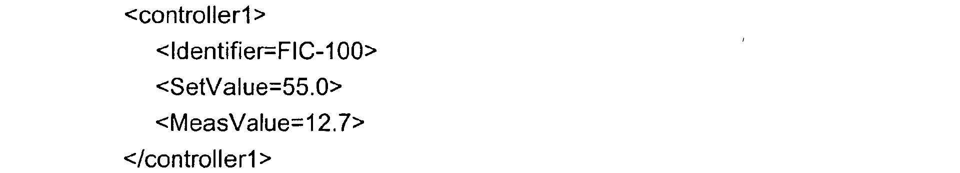

The same example may be presented in element form:

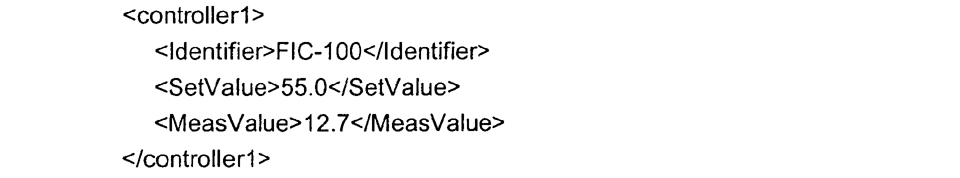

The status document is stored 303 as a status file. The status file is preferably stored in the memory of the server SE such that status files created at different times are distinguished by different names. The status file may also be stored in the memory of the workstation WS or in the database DB. If required, a status image may also be created from the process values of the XML status document generated and/or the additional information and displayed 303 on a display to the operator. The operator may preferably act on the status image displayed to him, for example pick a certain object from the status image, allowing the additional information related thereto to be retrieved from the status document. The data collection 301, generation 302 and storage 303 of status documents are preferably carried automatically at pre-specified intervals and also at the operator's command, if need be.

Stored status documents may be utilized later simply by retrieving and printing the status for the operator. However, the solution of the invention provides a special advantage by allowing status documents to be processed in different ways. Processing may be carried out in the device (WS or SE) retrieving the status document or in the device from which the status document is retrieved. The workstation WS is able to carry out retrievals from a status document loaded therein based on commands given by the user. The process values of the status documents may be compared, replaced with new ones or with the values of another status image document or different text or image format reports may be drawn up. XML-form documents can be processed with various tools and commands, examples for the comparison being the 'XMLdiff' tool by IBM™ or merging functions (merge to join files). An XML-form status document comprising information on all devices belonging to a certain process block may be loaded in the workstation. Processing may be the use of different filtering means, whereby only certain values (or values of certain tags) are retrieved from the status image documents. The user is able to easily and rapidly retrieve data from all these devices using a certain criterion (e.g. utilization rate). This speeds up the comparison of different situations significantly and enables the simultaneous retrieval and comparison of several values. The result of the processing may be presented to the user for instance by emphasizing the objects selected by the user or the objects of the status document having the same or different values. Values can be easily replaced based on the results of the filtered retrievals. The tags of the set values to be replaced are specified and deviating values are changed by software, for example. A status document can be processed locally in the workstation WS. This speeds up additional retrievals, since the bottleneck is the resources of the local device, not the data transfer.

Figure 3 further illustrates one important processing situation of status documents. Once the process operator's command or a programmed automatic check brings about the need 304 to compare the process status at different points in time, at least two status documents are specified and compared. The operator may for instance input the dates and times of day the information describing which is compared. The status documents specified are retrieved 305 based on the stored status files. In a typical situation there is need to compare the current status of the process with a previous status. In this case, the generation and storage 301-303 of a status document may still be initiated and the status document obtained may be used. It is also feasible to store the process values collected from the process and display them in some other form than XML, allowing the process values to be converted into XML-form status documents, if need be.

The tags whose values are compared are preferably pre-specified 306 in the application carrying out the comparison of the process values. The tags to be monitored can be pre-specified (programmed) 306 for different comparisons as different profiles, for example. This means that the operator is able to select several different profiles, based on which the status documents are compared in different ways (different tags). This makes the comparison of different situations easy and efficient, since information is obtained in different situations rapidly on only relevant differences. Configuring the process control by specifying which process values are collected 300 allows the tags to be compared also to be specified 306. The operator is also able to manually specify the tags/values to be compared. This naturally preferably requires that all tags be compared if no special request is made to restrict the comparison to certain tags.

The values of the tags to be compared are retrieved 305 from at least two status documents and compared 307. The use of a structural format provides the significant advantage that the application carrying out the comparison is able to directly retrieve the correct values and compare them based on the tags.

The differences are presented to the process operator. For this purpose, an XML-form difference document describing at least the differences can be created 308 and displayed 309 to the operator at the user interface UI. The operator may be shown the measurement values and set values of at least the tags whose measurement values are different in different status documents. The comparison may also use a profile in accordance with which the deviating set values are shown. This way the operator rapidly gets information on the differences observed and is able to control 310 the process based on the differences, if need be. The values are compared by software, making the comparison accurate and fast. The operator may also continue the comparison for instance by specifying 306 new tags to be compared. Different control functions may be programmed in the system and used to change the operation of the process based on the differences. The operator is able to select a certain control function or control may take place automatically.

In a typical situation, the intention is to change the operation of the process, to perform a change of the run situation, so to say, to conform to a previous status. In this case, a first status document describing the current status of the process is created and a second status document stored in a memory is retrieved. The set values of the process can then be changed 310 to conform to those of the second status document as far as those tags are concerned whose measurement values shows an essential difference between the first and second documents. A difference document is created 308 from the tags whose measurement values show an essential difference, preferably by including all information on the tags in the difference document. Since the difference document is stored in XML format, the application controlling the process is able to directly pick the set values of the tags included in the second status report. The current set values of the process can then be changed to conform to the previous set values. This provides the significant advantage of being able to rapidly change the process to conform to some previous situation without slow manual comparison.

The process values are collected 301; the XML status documents are created/stored 302, 303 and compared 305-308 typically in a workstation WS comprising one or more applications to carry out the steps illustrated in Figure 3. The functions may also be carried out in the servers SE. The functions may also be decentralized, for instance by a first server collecting process values, a second server generating status documents and a third server controlling the process. In accordance with a preferred embodiment of the invention, the workstation WS (or the server SE) comprises an XML browser application for displaying 303, 309 XML status documents to the operator at the user interface UI.

Table 1 illustrates the comparison of two status documents, wherein set and measurement values (SetValue, MeasValue) are retrieved for identifiers FIC-100 and MS-PID1 from two status image documents (DATE1, DATE2) of different points in time.

**Table 1**

| Identifier | DATE 1 | DATE2 | Action |
|---|---|---|---|
| FIC-100 | | | |
| SetValue | 55 | 60 | *Focus*/*Set* |
| MeasValue | 12.7 | 13.0 | *Focus*/*Set* |
| MS-PID1 | | | |
| SetValue | 44 | 55 | *Focus*/*Set* |
| MeasValue | 44 | 44 | *Focus*/*Set* |
| GLOBAL | *SET ALL* | *SET ALL* | |

The differences between set and/or measurement values may also be calculated for the presentation and display them in a separate column, yielding the difference document of step 308. The presentation may have been gathered for instance by filtering the tags having differing set values from status documents DATE1, DATE2. In this case, the user rapidly obtains information on process setting differences and is easily able to compare the measurement values. Based on the comparison 307, the data illustrated in table 1 are preferably displayed in a separate window in addition to the actual window that displays the process. By selecting the *Focus* function, the operator is able to emphasize the selected point (e.g. SetValue in document DATE1) for the operator to see in the process window. The *Set* function is used to set a new value in the process (e.g. from the second document DATE2). On the last line, the *SET ALL* function is used to set all the values of the first document DATE1 or the second document DATE2 to the process.

The XML language is unable to specify the appearance of the status document (or difference document), i.e. styles according to which the status document is shown on the display of the workstation or on paper. However, this can be considered an advantage, since the same status document can be used as the source for different types of workstations WS, whose display characteristics may vary significantly. The appearance can be designed for different workstations WS and servers SE by using the XSL specification (Extended Style sheet Language). In other words, XSL is a representation language for XML documents and is composed of two parts: modifications of XML documents and an editing vocabulary. In accordance with a preferred embodiment, the XML-language status file comprises a style sheet according to the XSL language regarding the appearance of the status document. Other style sheets may also be used, such as the CSS (Cascading Style Sheet).

A style sheet may specify the way the data are presented in a document, such as presentation order and/or appearance. Different style sheets may be used for different data or the data of different data sources. Having obtained the data (process values and additional information) from the data sources (301), the WS or SE is able to arrange the data in the order and appearance specified in the style sheet. The XSL style sheet may also comprise instructions according to which XML-form data can be converted into HTML form. This allows a status document or difference document to be displayed also in devices having only a HTML browser. A status document edited according to a style sheet may generally include text, hypertext, graphic data, data describing the status of the process (typically numerical) or references to graphic data images, audio, video and other contents. It may also include links to other files. As appendixes to status documents, programs, such as Java™ applet applications or Microsoft™ ActiveX applications can be loaded in workstations WS and they are able to attend to the processing of the above-described status documents. The characteristics of a status image (302) or a difference image (309) created based on a status document displayed on a display may also be displayed on the display as a separate dialog.

The primary embodiment of the present invention can be implemented using one or more programs to be executed in a processor. The workstations WS and servers SE comprise processors CPU, I/O means I/O and memory MEM, which may execute a computer program code, enabling the implementation of the functions illustrated in Figure 3. The computer program code may be stored in an internal memory MEM or in a separate computer-readable memory means, e.g. a diskette, a hard disk or a CD/DVD-ROM disk. The computer program code may also be distributed over a network. Integrated circuits IC may also be used to implement the invention.

It should be noted that the invention is not limited to the use of the XML language, but status documents and difference documents can also be specified (302, 308) in a format specified by some other structural language. A proprietary solution may also be used, which, however, does not provide the compatibility offered by XML.

The invention is applicable to any process control system wherein process values are collected from the process and presented to an operator. It is obvious to a person skilled in the art that as technology advances, the basic idea of the invention can be implemented in a variety of ways. The invention and its embodiments are thus not limited to the above examples, but may vary within the scope of the claims.

A method of using status images describing a process in a control system for an industrial automation process. In the method, process values are collected from the process describing the status thereof. Structured status documents are generated from the process values collected from the process. The process values comprised by at least two status documents are compared when there is need to find the differences in the operation of the process at different points in time. The differences in the status documents are displayed to a user. (Figure 3)

## Claims

1. A method of using status images describing a process in a control system for an industrial automation process, the method comprising the step of:
collecting process values from the process describing its status,
**characterized**by the method further comprising the steps of:
generating structured status documents from the process values collected from the process,
comparing the process values included in at least two status documents in response to a need to find differences in the operation of the process at different points in time, and
displaying at least the differences to a user.

2. A method as claimed in claim 1 ,**characterized by**
generating said status documents in accordance with the XML language, and
storing said status documents as XML-form status files.

3. A method as claimed in claim 1 or 2, wherein the process objects to be measured are identified using their special tags, **characterized by**
the process values including tag-specific set values and measurement values,
specifying, before the comparison, the tags whose values are monitored and compared,
retrieving and comparing the process values of the tags specified from at least two status documents, and
displaying the measurement values and set values to the user of at least the tags whose measurement values are different in different status documents.

4. A method as claimed in any one of the preceding claims, **characterized by**
controlling the process based on the differences.

5. A method as claimed in claim 4, wherein the process objects to be measured are identified using their special tags, and the process values including tag-specific set values and measurement values,
**characterized by**
generating a first status document describing the current status of the process in response to a need to compare the current status of the process with a previous status,
retrieving a second status document stored in a memory, and
changing the process set values to conform to those of the second status document as regards those tags whose measurement values included an essential difference between the first and the second status document.

6. A method as claimed in any one of the preceding claims, **characterized by**
generating a structured difference document that is based on at least two status documents to be compared and comprises process values that included differences,
displaying the difference document to the user, and
storing the difference document.

7. A process control system arranged to collect process values from the process describing its status, **characterized**in that the process control system is further arranged to:
generate structured status documents in accordance with the process values collected from the process,
store the status documents as status files,
compare the process values included in at least two status documents in response to a need to find the differences in the operation of the process at different points in time, and
display at least the differences to a user of the process.

8. A process control system as claimed in claim 7, **characterized in that**
computer program code is stored in a workstation or server of the process control system and when executed in the workstation or server achieves the generation, storage, comparison and display to the user of XML-form status documents.

9. A process control system as claimed in claim 7 or 8, wherein the process objects to be measured are identified using their special tags,
**characterized in that**
the process values comprise tag-specific set values and measurement values,
the process control system is arranged, prior to the comparison, to specify the tags whose values are monitored and compared,
the process control system is arranged to retrieve and compare the values of tags specified from at least two status documents, and
the process control system is arranged to display the measurement values and set values to the user of at least the tags whose measurement values are different in different status documents.

10. A process control system as claimed in any one of claims 7 to 9, **characterized in that**
the process control system is arranged to control the process based on the differences between the process values to be compared and comprised by at least two status documents.

11. A workstation in a process control system, the workstation comprising
means for collecting process values from the process describing its status, **characterized**in that the workstation further comprises
means for generating structured status documents based on the process values collected from the process,
means for storing the status documents as status files,
means for comparing the process values included in at least two status documents in response to a need to find the differences in the operation of the process at different points in time, and
means for displaying the differences to a user.

12. A workstation as claimed in claim 11, **characterized in that**
the workstation further comprises means for controlling the process based on the differences between the process values comprised by at least two status documents.

13. A workstation as claimed in claim 11 or 12, **characterized**in that
computer program code is stored in the workstation and, when executed in the workstation, it achieves the generation, storage, comparison and display of XML-form status documents to the user.
